(19) **Europäisches Patentamt / European Patent Office / Office européen des brevets**

(11) **EP 2 599 206 B1**

(12) **FASCICULE DE BREVET EUROPEEN**

(45) Date de publication et mention de la délivrance du brevet:
**15.06.2016 Bulletin 2016/24**

(21) Numéro de dépôt: **11736398.6**

(22) Date de dépôt: **29.07.2011**

(51) Int Cl.:
*H02M 3/158* (2006.01)      *H02M 3/156* (2006.01)

(86) Numéro de dépôt international:
**PCT/EP2011/063118**

(87) Numéro de publication internationale:
**WO 2012/013786 (02.02.2012 Gazette 2012/05)**

(54) **CONVERTISSEUR DC/DC QUADRATIQUE DOUBLE BOOST BIDIRECTIONNEL EN COURANT**

QUADRATISCHER DOPPELBOOST-GLEICHSPANNUNGSWANDLER MIT BIDIREKTIONALEM STROM

TWO-WAY CURRENT DOUBLE-BOOST QUADRATIC DC/DC CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2010 FR 1056339**

(43) Date de publication de la demande:
**05.06.2013 Bulletin 2013/23**

(73) Titulaires:
• **IFP Énergies nouvelles**
  **92852 Rueil-Malmaison Cedex (FR)**
• **Université De Poitiers**
  **86034 Poitiers Cedex (FR)**

(72) Inventeurs:
• **TOUZANI, Youssef**
  **F-92310 Sèvres (FR)**
• **KEFSI, Laid**
  **F-94800 Villejuif (FR)**
• **CHAMPENOIS, Gérard**
  **F-86280 Saint Benoit (FR)**
• **GAUBERT, Jean-Paul**
  **F-86000 Poitiers (FR)**

(74) Mandataire: **Ilgart, Jean-Christophe et al**
**BREVALEX**
**95, rue d'Amsterdam**
**75378 Paris Cedex 8 (FR)**

(56) Documents cités:
**EP-A1- 0 460 573      AT-B- 399 625**

• **HE HONGWEN ET AL: "DC/DC Converters Design and Control for Hybrid Power System", INTELLIGENT COMPUTATION TECHNOLOGY AND AUTOMATION (ICICTA), 2010 INTERNATIONAL CONFERENCE ON, IEEE, PISCATAWAY, NJ, USA, 11 mai 2010 (2010-05-11), pages 1089-1092, XP031716368, ISBN: 978-1-4244-7279-6**
• **ZHANG JIANCHENG ET AL: "An effective hybrid energy storage system based on battery-EDLC for distributed generation systems", INDUSTRIAL ELECTRONICS AND APPLICATIONS (ICIEA), 2010 THE 5TH IEEE CONFERENCE ON, IEEE, PISCATAWAY, NJ, USA, 15 juin 2010 (2010-06-15), pages 819-824, XP031711846, ISBN: 978-1-4244-5045-9**

## Description

## DOMAINE TECHNIQUE

L'invention se rapporte à un convertisseur DC/DC de tension, c'est-à-dire un dispositif qui a pour objet d'assurer la fluence d'énergie entre deux sources de tension. L'invention se rapporte en particulier à un convertisseur du type couramment appelé hacheur, correspondant aux applications moyenne et forte puissance.

D'un point de vue circuit électrique, ce type de convertisseur peut être considéré comme un transformateur de grandeurs électriques continues. Il existe deux variantes de base qui définissent le type de convertisseur DC/DC :

- si la tension de sortie est inférieure à la tension d'entrée, on parle d'un convertisseur DC/DC abaisseur ou « buck »,
- si la tension de sortie est supérieure à la tension d'entrée, on parle d'un convertisseur DC/DC élévateur ou « boost ».

Pour ce type de convertisseur, on parle de bidirectionnalité en courant lorsque le courant en entrée ou en sortie est capable de changer de sens pendant le fonctionnement du convertisseur.

## ÉTAT DE LA TECHNIQUE ANTÉRIEURE

Les convertiseurs DC/DC élévateurs ou Boost sont particulièrement utilisés sur des véhicules électriques et hybrides. Ils permettent d'interfacer la tension de la batterie et le bus continu de l'onduleur du moteur électrique en augmentant ou en réduisant la tension aux bornes du bus continu. Ils peuvent aussi être utilisé pour le couplage d'une batterie et d'un supercondensateur à l'entrée d'un onduleur.

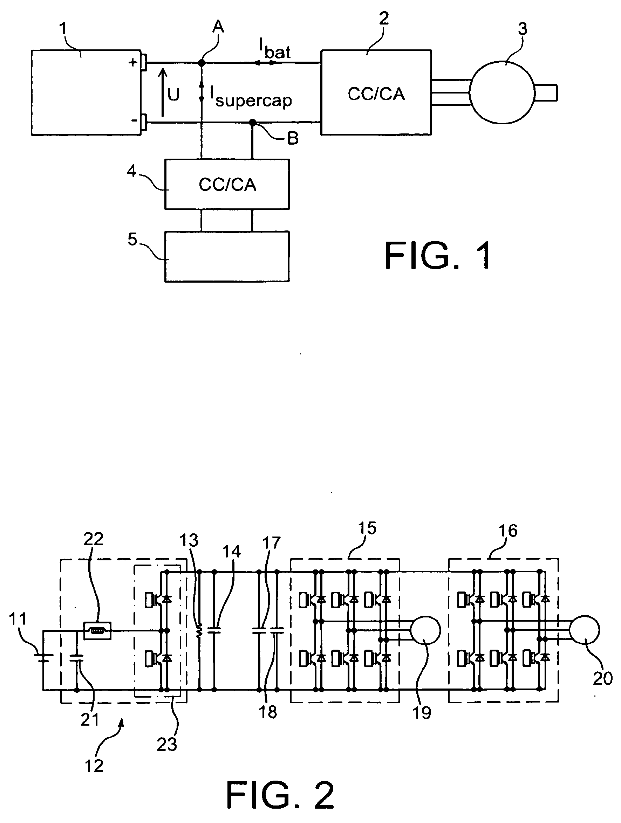

La figure 1 est un schéma représentant une chaîne de conversion électrique d'un véhicule électrique ou hybride. La référence 1 désigne une batterie délivrant une tension U entre les points A et B. L'entrée d'un onduleur 2 est connectée entre les points A et B. La sortie de l'onduleur 2 alimente le moteur électrique triphasé 3 du véhicule. Un convertisseur DC/DC 4 fait l'interface entre les points A et B d'une part et un supercondensateur 5 d'autre part. Sur le schéma, $I_{bat}$ représente le courant de batterie et $I_{supercap}$ représente le courant relatif au supercondensateur.

Dans ce domaine, l'utilisation de convertisseurs DC/DC présente un certain nombre d'avantages. Ils permettent la gestion des flux d'énergie entre le bus continu de l'onduleur et l'organe de stockage d'énergie. Ils permettent l'utilisation de batteries de faible tension. Ils permettent d'utiliser des onduleurs avec des tensions de bus continu très élevées (machines à grande vitesse). Ils autorisent une plus grande plage de variation de vitesse. Ils procurent un meilleur rendement total de la chaîne de conversion électrique.

Dans les véhicules hybrides et électriques, la tendance est orientée vers des tensions de bus continu d'onduleur de plus en plus élevées. L'avantage de cette tendance est la réduction de la section du cuivre dans le bobinage et des machines électriques plus petites. Mais cela impose l'utilisation des convertisseurs DC/DC pour élever la tension de la batterie.

Une deuxième utilisation des convertisseurs DC/DC de type Boost consiste à coupler des organes de stockage d'énergie embarqués. Par exemple, le couplage d'une batterie (énergie) et d'un supercondansateur (puissance).

Lorsque la source d'énergie est la batterie seule, le maintien de la tension du bus continu est très délicat dans le cas où la charge peut absorber ou fournir un niveau élevé de courant durant un temps très court (accélération ou freinage du véhicule par exemple). On peut ainsi constater une fluctuation de la tension fournie par la batterie installée sur un véhicule à motorisation hybride, pendant les pics positifs et négatifs de courant. Cela est dû au fait qu'une batterie est plutôt destinée (et souvent dimensionnée) à fournir l'énergie électrique (puissance nominale) non pas la puissance instantanée. Aussi, la batterie seule n'est pas toujours capable d'absorber toute l'énergie au freinage pendant un intervalle de temps très court. L'utilisation des batteries seules (instabilité de la tension) accélère leur vieillissement. Le fait d'associer un supercondensateur (dimensionné pour la puissance) permet de réduire les fluctuations de la tension batterie pendant toutes les plages de fonctionnement de la batterie et d'utiliser la totalité de l'énergie électrique disponible lors du freinage.

Dans le cas de l'utilisation d'un convertisseur DC/DC pour le couplage d'une batterie et d'un supercondensateur, la batterie impose la tension en sortie du convertisseur. Ce dernier est piloté directement en courant pour fournir les pics de puissance pendant les accélérations ou absorber les pics de courant au freinage. Le convertisseur DC/DC utilisé est nécessairement de type Boost réversible en courant. Car la tension d'un supercondensateur peut chuter de 50% (pour utiliser 75% de la charge du supercondensateur).

Dans une application de type véhicule électrique ou hybride, le cahier des charges type du convertisseur DC/DC imposera une tension continue en sortie avec un taux d'ondulation négligeable (inférieur à 3%). A la structure élémentaire du convertisseur vient alors s'associer les éléments linéaires (bobines d'inductance, condensateurs) qui sont des éléments d'adaptation des sources (courant/tension) et de filtrage.

La figure 2 est un schéma illustrant la chaîne de conversion électrique mise en oeuvre sur le véhicule hybride de la marque Lexus équipé du moteur RX 400h. La référence 11 désigne une batterie de 288 V branchée à l'entrée d'un convertisseur DC/DC Boost réversible en courant 12 délivrant une tension de sortie de 650 V aux bornes de la résistance 13 et du condensateur de lissage 14. La tension de sortie du convertisseur alimente un premier onduleur 15 et un deuxième onduleur 16. Les entrées des onduleurs 15 et 16 sont pourvues de condensateurs de filtrage 17 et 18. L'onduleur 15 fournit une tension alternative d'alimentation au moteur 19 tandis que l'onduleur 16 récupère le courant généré par le moteur 20.

Le convertisseur 12 reçoit la tension de la batterie 11 aux bornes du condensateur de filtrage 21. Cette tension est transmise, au travers d'une bobine d'induction 22 à un module IPM (pour « Intelligent Power Module ») 23.

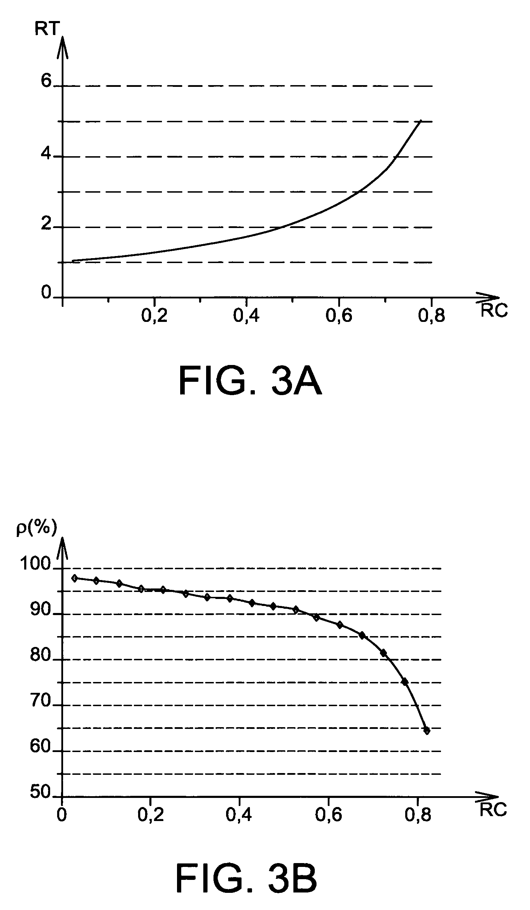

Les figures 3A et 3B sont des diagrammes illustrant respectivement l'évolution du rapport de transformation RT de la tension d'entrée du convertisseur 12 (convertisseur DC/DC Boost réversible en courant) et le rendement ρ du convertisseur (en ordonnées) par rapport au rapport cyclique RC (en abscisses). Les courbes représentées sur les figures 3A et 3B ont été tracées en modélisant les pertes dans ce type de dispositif (conduction, commutation et dans les composants passifs). Les calculs ont été faits pour un convertisseur de puissance de 40 kW (200 V en tension d'entrée et une tension de sortie contrôlée par le rapport cyclique du signal de pilotage). Les courbes des figures 3A et 3B montrent que plus les rapports de transformation en tension sont élevés, moins le convertisseur est efficace sur le plan du rendement. Le rapport cyclique du signal de pilotage correspond à la durée « temporelle » de l'impulsion de commande divisée par la période de découpage du convertisseur. Ce rapport varie dans la plage 0 à 1.

Généralement, lorsqu'on cherche à coupler des sources d'énergie embarquées, l'objectif est de réduire l'encombrement, le poids et le coût du dispositif embarqué tout en maintenant le même rendement. Lorsqu'un supercondensateur est couplé à une batterie, il ne faut pas que ce couplage engendre des contraintes d'encombrement, de coût et de poids plus importantes que le simple ajout de cellules supplémentaires dans la batterie. En d'autres termes, la tension du supercondensateur doit être plus faible que celle de la batterie. Si par exemple la tension du supercondensateur est égale à la moitié de la tension de la batterie, on peut utiliser le convertisseur Boost standard réversible avec un rendement de l'ordre de 92%. Cependant, si l'on souhaite utiliser toute la plage de charge du supercondensateur, le convertisseur atteindra un rendement beaucoup plus faible (de l'ordre de 80%). En effet, pour atteindre 50% de la tension du supercondensateur, il faut prévoir un rapport de transformation de la tension supérieur à 4. Ce problème est d'autant plus important que la tension nominale du supercondensateur est faible.

## EXPOSÉ DE L'INVENTION

Pour remédier aux problèmes de l'art antérieur détaillés ci-dessus, il est proposé une nouvelle topologie de conversion DC/DC de type Boost capable d'effectuer des rapports de transformation plus élevés que les dispositifs de l'art antérieur, avec un rendement identique. Ce nouveau dispositif peut être dénommé « convertisseur DC/DC quadratique double boost réversible en courant. »

L'invention a donc pour objet un convertisseur DC/DC Boost réversible en courant destiné à servir d'interface entre une première source de tension continue et une deuxième source de tension continue, la tension de la première source de tension continue étant inférieure à la tension de la deuxième source de tension continue, le convertisseur ayant une topologie constituée des branches suivantes :

- une première branche reliant les pôles positifs de la première et de la deuxième source de tension continue et comprenant, en série de la première à la deuxième source de tension continue, une première bobine d'induction, un premier interrupteur commandé en ouverture et en fermeture, une deuxième bobine d'induction et un troisième interrupteur commandé en ouverture et en fermeture,
- une deuxième branche reliant les pôles négatifs de la première et de la deuxième source de tension continue,
- une troisième branche, connectée en parallèle sur le premier interrupteur et la deuxième bobine mis en série, comprenant une diode dont l'anode est du côté du pôle positif de la première source de tension,
- une quatrième branche, connectée entre la deuxième branche et la partie de la première branche située entre la première bobine d'induction et le premier interrupteur, comprenant une deuxième diode dont l'anode est du côté de la deuxième branche,
- une cinquième branche, connectée entre la deuxième branche et la partie de la première branche située entre le premier interrupteur et la deuxième bobine d'induction, comprenant un premier condensateur,
- une sixième branche, connectée entre la deuxième branche et la partie de la première branche située entre la deuxième bobine d'induction et le troisième interrupteur, comprenant un deuxième interrupteur commandé en ouverture et en fermeture,
- une septième branche, connectée en parallèle sur la deuxième source de tension continue, et comprenant un deuxième condensateur,
  le convertisseur comprenant des moyens de commande des interrupteurs pour que :
- lorsque le courant dans le convertisseur circule de la première vers la deuxième source de tension, pendant une période de commande allant de 0 à T et pour un rapport cylique $\alpha$

- du temps t=0 au temps t=$\alpha$T, avec 0<$\alpha$<1, les premier et troisième interrupteurs sont ouverts et le deuxième interrupteur est fermé,
- du temps t=$\alpha$T au temps t=T, les premier et troisième interrupteurs sont fermés et le deuxième interrupteur est ouvert,

- lorsque le courant dans le convertisseur circule de la deuxième vers la première source de tension pendant une période de commande allant de 0 à T et pour un rapport cyclique $\alpha$ :

- du temps t=0 au temps t=$\alpha$T, avec 0<$\alpha$<1, les premier et troisième interrupteurs sont fermés et le deuxième interrupteur est ouvert,
- du temps t=$\alpha$T au temps t=T, les premier et troisième interrupteurs sont ouverts et le deuxième interrupteur est fermé.

De préférence, le rapport cyclique $\alpha$ est compris entre 0,25 et 0,75.

Avantageusement, les interrupteurs commandés en ouverture et en fermeture sont des composants choisis parmi des MOSFET et des IGBT, avec des diodes montées en antiparallèle.

## BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1 est un schéma représentant une chaîne de conversion électrique d'un véhicule électrique ou hybride,
- la figure 2 est un schéma illustrant la chaîne de conversion électrique mise en oeuvre sur un véhicule hybride, selon l'art antérieur,
- les figures 3A et 3B sont des diagrammes illustrant respectivement l'évolution du rapport de transformation de la tension d'entrée d'un convertisseur DC/DC boost réversible en courant et le rendement du convertisseur par rapport au rapport cyclique du signal de pilotage,
- la figure 4 est un schéma illustrant la topologie d'un convertisseur quadratique double boost réversible en courant selon la présente invention,
- la figure 5 est un diagramme illustrant le principe du rapport cyclique des signaux de pilotage pour le convertisseur selon l'invention,
- la figure 6 est un diagramme montrant la variation du rapport de transformation de la tension en fonction du rapport cyclique pour le convertisseur selon l'invention,
- les figures 7A et 7B sont des schémas électriques illustrant le principe de fonctionnement en sens direct (boost) du convertisseur selon l'invention,
- les figures 8A et 8B sont des schémas électriques illustrant le principe de fonctionnement en sens inverse (buck) du convertisseur selon l'invention.

## EXPOSÉ DÉTAILLÉ DE MODES DE RÉALISATION PARTICULIERS

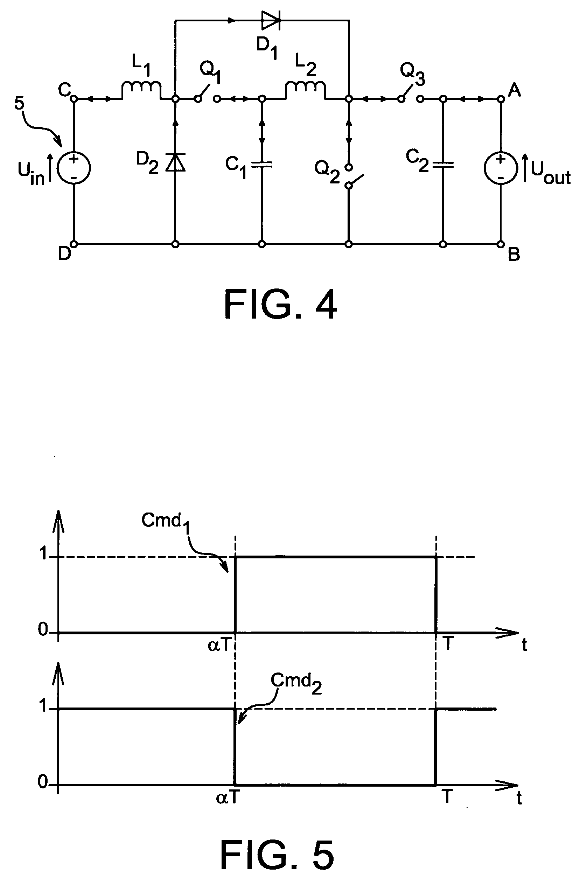

La figure 4 est un schéma illustrant la topologie d'un convertisseur quadratique double boost réversible en courant selon la présente invention. Le convertisseur représenté sur cette figure assure l'interface entre le supercondensateur 5, aux bornes (les points C et D) duquel existe une tension d'entrée $U_{in}$, et les points A et B (voir la figure 1) entre lesquels existe une tension de sortie $U_{out}$.

Entre les points C et A sont branchés en série une première bobine d'induction $L_1$, un premier interrupteur $Q_1$, une deuxième bobine d'induction $L_2$ et un troisième interrupteur $Q_3$. La liaison entre les points D et B est une connexion à la masse.

Une diode $D_1$ est branchée en parallèle sur les éléments $Q_1$ et $L_2$ mis en série. L'anode de la diode $D_1$ est du côté du point C tandis que sa cathode est du côté du point A.

Une diode $D_2$ est branchée entre la masse et la connexion reliant les éléments $L_1$ et $Q_1$. L'anode de la diode $D_2$ est connectée à la masse.

Un condensateur $C_1$ est branché entre la masse et la connexion reliant les éléments $Q_1$ et $L_2$. Un condensateur $C_2$ est branché entre les points A et B.

Un deuxième interrupteur $Q_2$ est branché entre la masse et la connexion reliant les éléments $L_2$ et $Q_3$.

Les interrupteurs $Q_1$, $Q_2$ et $Q_3$ sont des interrupteurs commandés en ouverture et en fermeture, de type MOSFET ou IGBT avec des diodes montées en antiparallèle.

La figure 5 est un diagramme illustrant le principe du rapport cyclique des signaux de pilotage en fonction du temps t pour le convertisseur selon l'invention. Les interrupteurs $Q_1$ et $Q_3$ sont pilotés par le même signal de commande appelé $Cmd_1$. L'interrupteur $Q_2$ est piloté par le signal de commande $Cmd_2$, complémentaire de $Cmd_1$. Le diagramme de la figure 5 illustre le principe du rapport cyclique $\alpha$ des signaux de pilotage au sein d'une période de commande T.

Les bobines d'induction $L_1$ et $L_2$ présentent des résistances internes $r_1$ et $r_2$ respectivement. On appelle R la résistance équivalente à la charge entre les points A et B. La durée des impulsions de commande (représentée par le rapport cyclique $\alpha$) conditionne le rapport de transformation du convertisseur. L'expression de la tension de sortie par rapport à la tension d'entrée s'écrit :

$$\frac{U_{out}}{U_{in}} = \frac{(1-\alpha)}{\left[\frac{r_1}{R}+\frac{r_2}{R}(1-\alpha)^2+(1-\alpha)^4\right]} \qquad (1)$$

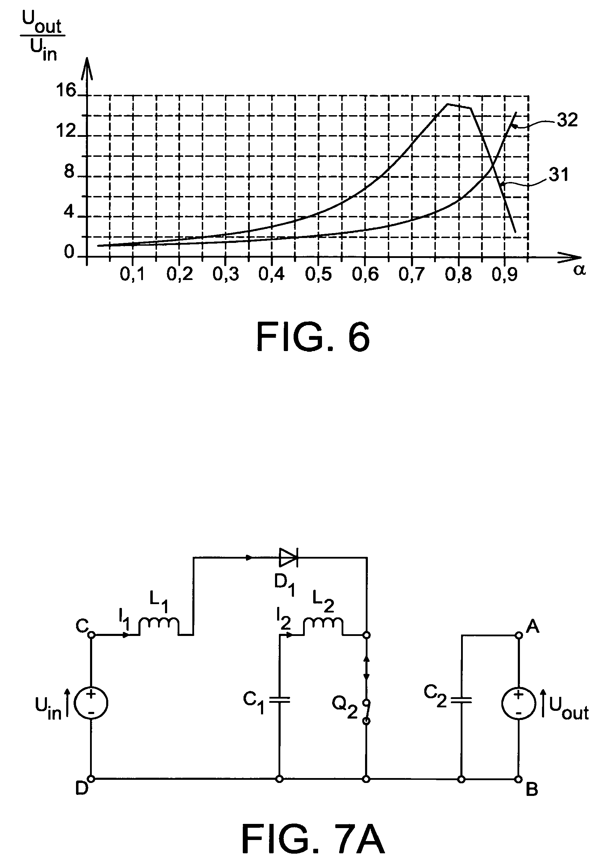

A partir de la relation (1) on peut tracer la courbe de variation du rapport $U_{out}/U_{in}$ en fonction du rapport cyclique $\alpha$. Cette courbe est référencée 31 dans le diagramme de la figure 6. Dans ce diagramme, on a aussi représenté sous la référence 32 la courbe de variation correspondante pour un convertisseur DC/DC boost réversible selon l'art connu (voir la figure 3A).

A titre d'exemple, le convertisseur selon l'invention peut présenter les valeurs suivantes :

$r_1 = r_2 = 10$ m$\Omega$
$L_1 = 625$ $\mu$H et $L_2 = 1250$ $\mu$H
$C_1 = 500$ $\mu$F et $C_2 = 250$ $\mu$F
$R = 10$ $\Omega$
fréquence de découpage : 20 kHz
$U_{in} = 25$ V et $U_{out} = 100$ V
$I_{in} = 40$ A et $I_{out} = 10$ A

Etant donné les limitations en fréquence de commutation des interrupteurs (MOSFET, IGBT, ...) et pour ne pas accroître les pertes par commutation dans les convertisseurs DC/DC, le rapport cyclique est généralement compris entre 0,25 et 0,75. Dans ces conditions, la topologie du convertisseur selon l'invention présente un gain très supérieur à la topologie standard. On notera que les deux courbes de la figure 6 sont tracées dans des conditions de rendement identiques.

On va maintenant décrire le principe de focntionnement de la topologie de convertisseur DC/DC double boost réversible selon l'invention. Pour cela, on va se baser sur les deux signaux de commande représentés sur le diagramme de la figure 5. On parle de sens direct de fonctionnement lorsque le courant circule de $U_{in}$ vers $U_{out}$ et de sens inverse lorsque le courant circule de $U_{out}$ vers $U_{in}$.

Fonctionnement en sens direct (Boost)

La figure 7A illustre le fonctionnement du convertisseur selon l'invention pendant la phase de fonctionnement comprise entre t=0 et t=$\alpha$T (c'est-à-dire $Cmd_1$=0 et $Cmd_2$=1). Les interrupteurs $Q_1$ et $Q_3$ sont ouverts et l'interrupteur $Q_2$ est fermé. La diode $D_1$ conduit naturellement et la diode $D_2$ est bloquée. Ceci permet de charger les bobines d'induction $L_1$ et $L_2$ en parallèle. La bobine $L_1$ est chargée par la source d'entrée $U_{in}$ et la bobine $L_2$ est chargée à travers le condensateur $C_1$.

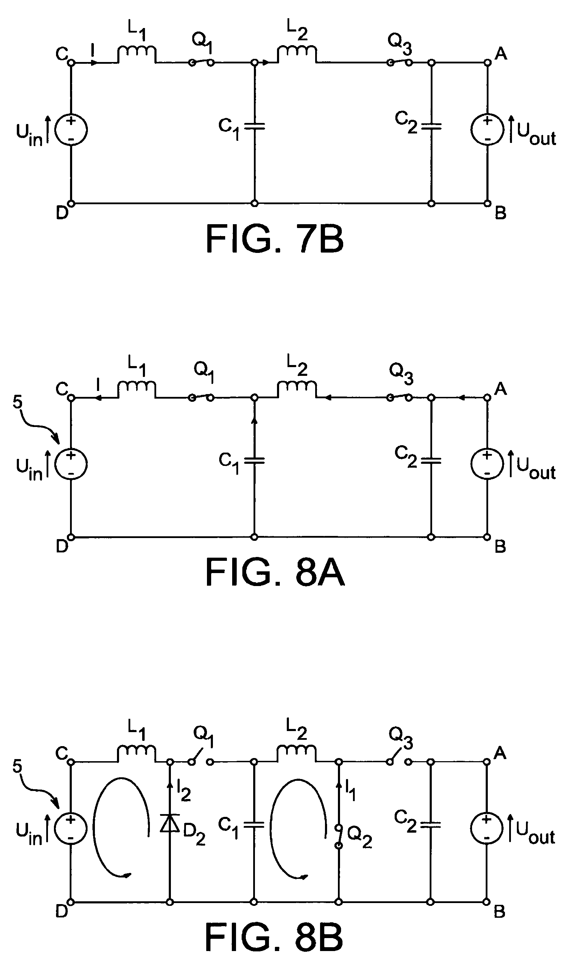

La figure 7B illustre le fonctionnement du convertisseur selon l'invention pendant la phase de fonctionnement comprise entre t=$\alpha$T et t=T (c'est-à-dire $Cmd_1$=1 et $Cmd_2$=0). Les interrupteurs $Q_1$ et $Q_3$ sont fermés et l'interrupteur $Q_2$ est ouvert. Les deux diodes $D_1$ et $D_2$ restent bloquées. Ceci entraîne la décharge en série des deux bobines d'induction $L_1$ et $L_2$ dans la sortie $U_{out}$ tout en rechargeant de nouveau le condensateur $C_1$.

Fonctionnement en sens inverse (Buck)

La figure 8A illustre le fonctionnement du convertisseur selon l'invention pendant la phase de fonctionnement comprise entre t=0 et t=$\alpha$T (c'est-à-dire $Cmd_1$=1 et $Cmd_2$=0). Les interrupteurs $Q_1$ et $Q_3$ sont fermés et l'interrupteur $Q_2$ est ouvert. Les diodes $D_1$ et $D_2$ sont naturellement bloquées. Dans cette phase de fonctionnement, la bobine d'induction $L_2$ est chargée par la source $U_{out}$ et la bobine d'induction $L_1$ se charge à travers le condensateur $C_1$ et la source

d'entrée $U_{in}$.

La figure 8B illustre le fonctionnement du convertisseur selon l'invention pendant la phase de fonctionnement comprise entre t=$\alpha$T et t=T (c'est-à-dire $Cmd_1$=0 et $Cmd_2$=1). Les interrupteurs $Q_1$ et $Q_3$ sont ouverts et l'interrupteur $Q_2$ est fermé. La diode $D_2$ conduit naturellement et la diode $D_1$ est bloquée. Ceci entraîne la décharge de la bobine d'induction $L_2$ dans le condensateur $C_1$ à travers l'interrupteur $Q_2$ et la décharge de la bobine d'induction $L_1$ dans $U_{in}$ à travers la diode de roue libre $D_2$.

**Revendications**

1. Convertisseur DC/DC Boost réversible en courant destiné à servir d'interface entre une première source de tension continue et une deuxième source de tension continue, la tension de la première source de tension continue étant inférieure à la tension de la deuxième source de tension continue, le convertisseur ayant une topologie constituée des branches suivantes :

   - une première branche reliant les pôles positifs de la première et de la deuxième source de tension continue et comprenant, en série de la première à la deuxième source de tension continue, une première bobine d'induction ($L_1$), un premier interrupteur commandé en ouverture et en fermeture ($Q_1$), une deuxième bobine d'induction ($L_2$) et un troisième interrupteur commandé en ouverture et en fermeture ($Q_3$),
   - une deuxième branche reliant les pôles négatifs de la première et de la deuxième source de tension continue,
   - une troisième branche, connectée en parallèle sur le premier interrupteur ($Q_1$) et la deuxième bobine ($L_2$) mis en série, comprenant une diode ($D_1$) dont l'anode est du côté du pôle positif de la première source de tension,
   - une quatrième branche, connectée entre la deuxième branche et la partie de la première branche située entre la première bobine d'inductin ($L_1$) et le premier interrupteur ($Q_1$), comprenant une deuxième diode ($D_2$) dont l'anode est du côté de la deuxième branche,
   - une cinquième branche, connectée entre la deuxième branche et la partie de la première branche située entre le premier interrupteur ($Q_1$) et la deuxième bobine d'induction ($L_2$), comprenant un premier condensateur ($C_1$),
   - une sixième branche, connectée entre la deuxième branche et la partie de la première branche située entre la deuxième bobine d'induction ($L_2$) et le troisième interrupteur ($Q_3$), comprenant un deuxième interrupteur commandé en ouverture et en fermeture ($Q_2$),
   - une septième branche, connectée en parallèle sur la deuxième source de tension continue, et comprenant un deuxième condensateur ($C_2$),

   le convertisseur comprenant des moyens de commande des interrupteurs pour que :

   - lorsque le courant dans le convertisseur circule de la première vers la deuxième source de tension, pendant une période de commande allant de 0 à T et pour un rapport cylique $\alpha$ :

     • du temps t=0 au temps t=$\alpha$T, avec 0<$\alpha$<1, les premier ($Q_1$) et troisième ($Q_3$) interrupteurs sont ouverts et le deuxième interrupteur ($Q_2$) est fermé,
     • du temps t=$\alpha$T au temps t=T, les premier ($Q_1$) et troisième ($Q_3$) interrupteurs sont fermés et le deuxième interrupteur ($Q_2$) est ouvert,

   - lorsque le courant dans le convertisseur circule de la deuxième vers la première source de tension pendant une période de commande allant de 0 à T et pour un rapport cyclique $\alpha$ :

     • du temps t=0 au temps t=$\alpha$T, avec 0<$\alpha$<1, les premier ($Q_1$) et troisième ($Q_3$) interrupteurs sont fermés et le deuxième interrupteur ($Q_2$) est ouvert,
     • du temps t=$\alpha$T au temps t=T, les premier ($Q_1$) et troisième ($Q_3$) interrupteurs sont ouverts et le deuxième interrupteur ($Q_2$) est fermé.

2. Convertisseur selon la revendication 1, dans lequel le rapport cyclique $\alpha$ est compris entre 0,25 et 0,75.

3. Convertisseur selon l'une des revendications 1 ou 2, dans lequel les interrupteurs commandés en ouverture et en fermeture ($Q_1$, $Q_2$, $Q_3$) sont des composants choisis parmi des MOSFET et des IGBT, avec des diodes montées en antiparallèle.

**Patentansprüche**

1. Boost-Gleichspannungswandler mit umkehrbarer Polarität, welcher zur Verwendung bei einer Schnittstelle zwischen einer ersten Gleichspannungsquelle und einer zweiten Gleichspannungsquelle bestimmt ist, wobei die Spannung der ersten Gleichspannungsquelle kleiner ist als die Spannung der zweiten Gleichspannungsquelle, wobei der Wandler eine Topologie aufweist, die aus den folgenden Bereichen bzw. Zweigen besteht:

   - einem ersten Zweig, welcher die positiven Pole der ersten und der zweiten Gleichspannungsquelle verbindet und eine erste Induktionsspule ($L_1$), die von der ersten zur zweiten Gleichspannungsquelle in Serie geschaltet ist, einen ersten Ein-Aus-Schalter $Q_1$, der durch Öffnen und Schließen gesteuert wird, eine zweite Induktionsspule ($L_2$) und einen dritten Ein-Aus-Schalter ($Q_3$) aufweist, der durch Öffnen und Schließen gesteuert wird;
   - einem zweiten Zweig, welcher die negativen Pole der ersten und der zweiten Gleichspannungsquelle verbindet;
   - einem dritten Zweig, welcher mit dem ersten Ein-Aus-Schalter ($Q_1$) parallel geschaltet ist wobei die zweite Induktionsspule ($L_2$) in Serie geschaltet ist, wobei der dritte Zweig eine Diode ($D_1$) aufweist, deren Anode auf der Seite des positiven Pols der ersten Spannungsquelle angeordnet ist;
   - einem vierten Zweig, welcher zwischen dem zweiten Zweig und dem Abschnitt des ersten Zweigs, welcher zwischen der ersten Induktionsspule ($L_1$) und dem ersten Ein-Aus-Schalter ($Q_1$) angeordnet ist, verbunden ist, wobei der vierte Zweig eine zweite Diode ($D_2$) umfasst, deren Anode auf der Seite des zweiten Zweigs angeordnet ist;
   - einem fünften Zweig, welcher zwischen dem zweiten Zweig und dem Abschnitt des ersten Zweigs, welcher zwischen dem ersten Ein-Aus-Schalter ($Q_1$) und der zweiten Induktionsspule ($L_2$) angeordnet ist, verbunden ist, wobei der fünfte Zweig einen ersten Kondensator ($C_1$) umfasst;
   - einem sechsten Zweig, welcher zwischen dem zweiten Zweig und dem Abschnitt des ersten Zweigs, welcher zwischen der zweiten Induktionsspule ($L_2$) und dem dritten Ein-Aus-Schalter ($Q_3$) angeordnet ist, verbunden ist, wobei der sechste Zweig einen zweiten Ein-Aus-Schalter ($Q_2$) umfasst, der durch Öffnen und Schließen gesteuert wird;
   - einem siebten Zweig, welcher mit der zweiten Gleichspannungsquelle parallel geschaltet ist, und einen zweiten Kondensator ($C_2$) umfasst;

   wobei der Wandler Mittel bzw. Einrichtungen zur Steuerung der Ein-Aus-Schalter aufweist, damit:

   - wenn der Strom in dem Wandler von der ersten Gleichspannungsquelle zur zweiten Gleichspannungsquelle während einer Steuerperiode, die von 0 bis T reicht, fließt und bei einem zyklischen Verhältnis bzw. Tastverhältnis a:

     À vom Zeitpunkt t=0 bis zum Zeitpunkt t=aT, wobei 0<a<1, der erste ($Q_1$) und der dritte ($Q_3$) Ein-Aus-Schalter geöffnet sind und der zweite Ein-Aus-Schalter ($Q_2$) geschlossen ist;
     À vom Zeitpunkt t=aT bis zum Zeitpunkt t=T, der erste ($Q_1$) und der dritte Ein-Aus-Schalter ($Q_3$) geschlossen sind und der zweite Ein-Aus-Schalter ($Q_2$) geöffnet ist;

   - wenn der Strom in dem Wandler von der zweiten Gleichspannungsquelle zur ersten Gleichspannungsquelle während einer Steuerperiode, die von 0 bis T reicht, fließt und bei einem zyklischen Verhältnis bzw. Tastverhältnis a:

     À vom Zeitpunkt t=0 bis zum Zeitpunkt t=aT, wobei 0<a<1, der erste ($Q_1$) und der dritte ($Q_3$) Ein-Aus-Schalter geschlossen sind und der zweite Ein-Aus-Schalter ($Q_2$) geöffnet ist;
     À vom Zeitpunkt t=aT bis zum Zeitpunkt t=T, der erste ($Q_1$) und der dritte Ein-Aus-Schalter ($Q_3$) geöffnet sind und der zweite Ein-Aus-Schalter ($Q_2$) geschlossen ist.

2. Wandler nach Anspruch 1, in welchem das zyklische Verhältnis bzw. Tastverhältnis a zwischen 0,25 und 0,75 liegt.

3. Wandler nach einem der Ansprüche 1 oder 2, in welchem die durch Offen und Schließen gesteuerten Ein-Aus-Schalter ($Q_1$, $Q_2$, $Q_3$) Bestandteile sind, welche unter Metall-Oxid-Halbleiter-Feldeffekttransistoren MOSFET und Bipolartransistoren mit isolierter Gate-Elektrode IGBT ausgewählt werden, wobei die Dioden antiparallel geschaltet sind.

**Claims**

1. Current-reversible DC/DC Boost converter that will act as an interface between a first DC voltage source and a second DC voltage source, the voltage of the first DC voltage source being less than the voltage of the second DC voltage source, the topology of the converter being made of the following branches:

   - a first branch connecting the positive poles of the first and the second DC voltage sources and comprising, in series from the first to the second DC voltage sources, a first induction coil ($L_1$), a first switch controlled in opening and in closing ($Q_1$), a second induction coil ($L_2$) and un third switch controlled in opening and in closing ($Q_3$);
   - a second branch connecting the negative poles of the first and the second DC voltage sources;
   - a third branch, connected in parallel to the first switch ($Q_1$) and the second coil ($L_2$) in series, comprising a diode ($D_1$) of which the anode is on the side of the positive pole of the first voltage source;
   - a fourth branch, connected between the second branch and the part of the first branch located between the first induction coil ($L_1$) and the first switch ($Q_1$), comprising a second diode ($D_2$) the anode of which is on the side of the second branch;
   - a fifth branch, connected between the second branch and the part of the first branch located between the first switch ($Q_1$) and the second induction coil ($L_2$), comprising a first capacitor ($C_1$),
   - a sixth branch, connected between the second branch and the part of the first branch located between the second induction coil ($L_2$) and the third switch ($Q_3$), comprising a second switch controlled in opening and in closing ($Q_2$),
   - a seventh branch, connected in parallel on the second DC voltage source and comprising a second capacitor ($C_2$),

   the converter comprising means for controlling the switches so that:

   - when the current in the converter circulates from the first to the second voltage source, during a control period varying from 0 to T and for a cyclic ratio $\alpha$:

     • from time t=0 to time t=$\alpha$T, where 0<$\alpha$<1, the first ($Q_1$) and third ($Q_3$) switches are open and the second switch ($Q_2$) is closed,
     • from time t=$\alpha$T to time t=T, the first ($Q_1$) and third ($Q_3$) switches are closed and the second switch ($Q_2$) is open,

   - when the current in the converter circulates from the second to the first voltage source for a control period varying from 0 to T and for a cyclic ratio $\alpha$:

     • from time t=0 to time t=$\alpha$T, where 0<$\alpha$<1, the first ($Q_1$) and third ($Q_3$) switches are closed and the second switch ($Q_2$) is open,
     • from time t=$\alpha$T to time t=T, the first ($Q_1$) and third ($Q_3$) switches are open and the second switch ($Q_2$) is closed.

2. Converter according to claim 1, in which le cyclic ratio $\alpha$ is between 0.25 and 0.75.

3. Converter according to any one of claims 1 or 2, in which the switches controlled in opening and in closing ($Q_1$, $Q_2$, $Q_3$) are components chosen from among MOSFETs and IGBTs, with diodes installed in anti-parallel.

FIG. 1

FIG. 2

FIG. 3A

FIG. 3B

## FIG. 4

## FIG. 5

FIG. 6

FIG. 7A

FIG. 7B

FIG. 8A

FIG. 8B